# EUROPEAN PATENT SPECIFICATION

(11) **EP 0 970 415 B1**
(45) Date of publication and mention of the grant of the patent: **30.05.2001**
(21) Application number: 98911816.1
(22) Date of filing: 23.03.1998
(51) Int. Cl.: G06F 3/02

(54) **SPLIT KEYBOARD**
GETEILTE TASTATUR
CLAVIER AJUSTABLE

(30) Priority: 25.03.1997 US 826797
(43) Date of publication of application: 12.01.2000
(73) Proprietor: ERICSSON INC., Research Triangle Park, NC 27709 (US)
(72) Inventor: KUROKAWA, Haruo, Morrisville, NC 27560 (US)
(74) Representative: Giles, Ashley Simon
(86) International application number: US9805389
(87) International publication number: WO9843157

(56) References cited:
- EP-A- 0 489 491
- US-A- 5 596 480
- US-A- 5 651 622
- PATENT ABSTRACTS OF JAPAN vol. 017, no. 189 (P-1521), 13 April 1993 & JP 04 340122 A (KAZUO KAWASAKI), 26 November 1992, & JP 04 340 122 A (KAZUO KAWASAKI)

## Description

### Field of the Invention

The present invention relates generally to keyboards. More particularly, the present invention relates to split keyboards which can be stored in a relatively small space and in which the split keyboard pieces can be adjustably positioned.

### Background of the Invention

Split keyboards, in which a standard keyboard is divided into multiple cooperating sections, are known and are desirable for numerous reasons. Such keyboards allow the cooperating sections or elements to be adjustably positioned with respect to each other, so that a user can customize the relative positions of the keyboard sections. Such keyboards also allow a keyboard to be reduced in size for storage in a relatively small area without compromising the size of the keys.

U.S. Patent 5,424,728 to Goldstein discloses a split keyboard for a computer terminal having mumally detachable and/or pivotable keyboard sections, each of which is provided with a subset of keys. The keyboard is designed to improve user comfort, and to this end the keyboard sections are coupled together by a joint which allows angular adjustment in three different axes. While the single pivot point in the split keyboard disclosed by Goldstein allows a wide range of angular adjustment, the single pivot point has the disadvantage of reduced stability.

It would be desirable for a split keyboard to allow multiple keyboard segments to be adjustably arranged to maximize user comfort, minimize storage space without compromising key size, and to provide stability.

EP 0489491 A discloses a split keyboard

JP 04 340 122A discloses a keyboard having all of the pre-characterising features of claims 1 and 6 apart from the provision of a slideable dovetail and groove connection in place of the pin and slot connection of claims 1 and 6.

### Summary of the Invention

The present invention as set forth in claims 1 and 6 overcomes the above-described problems, and provides additional advantages, by providing that the first connection pin is attached to the first keyboard element substantially near the first top and the second connection pin is attached to the second keyboard element substantially near the second top. The invention preferably comprises a keyboard base element in which are formed the slots for receiving at least one connection pin connected to one of the keyboard elements or to the connection means to achieve one or more slidable connections. In the keyboard according to the present invention, the relative positions of the keyboard elements are adjustable by pivoting the keyboard elements about the connection means while sliding the at least one connection pin along the first slot.

Thus, the present invention provides for a keyboard which includes adjustable keyboard elements to maximize user comfort and minimize storage space without compromising key size. As a result of using a keyboard base element in combination with the split keyboard elements, the keyboard of the present invention offers improved stability and durability over conventional keyboards.

### Brief Description of the Drawings

A more complete understanding of the present invention can be obtained upon reading the following Detailed Description of the Preferred Embodiments, in conjunction with the accompanying drawings, in which like reference indicia are used to designate like elements, and in which:
FIG. 1 is an overview diagram of a split keyboard according to an embodiment of the present invention in a closed position;
FIG. 2 is an overview diagram of the split keyboard of FIG. 1 in a partially open position;
FIG. 2a is an overview diagram of an alternate embodiment of the present invention in a partially open position;
FIG. 3 is an overview diagram of the split keyboard of FIG. 1 in a fully-opened position;
FIG. 4a is a diagram of showing the assembly of the split keyboard of FIG. 1;
FIGS. 4b-c are cross-sectional diagrams of the connector means of the split keyboard of FIG. 1;
FIG. 4d is a cross-sectional diagram of the connector pins of the split keyboard of FIG. 1; and
FIGS. 4e-f are cross-sectional diagrams of a retaining means usable in the split keyboard of FIG. 1.

### Detailed Description of the Preferred Embodiments

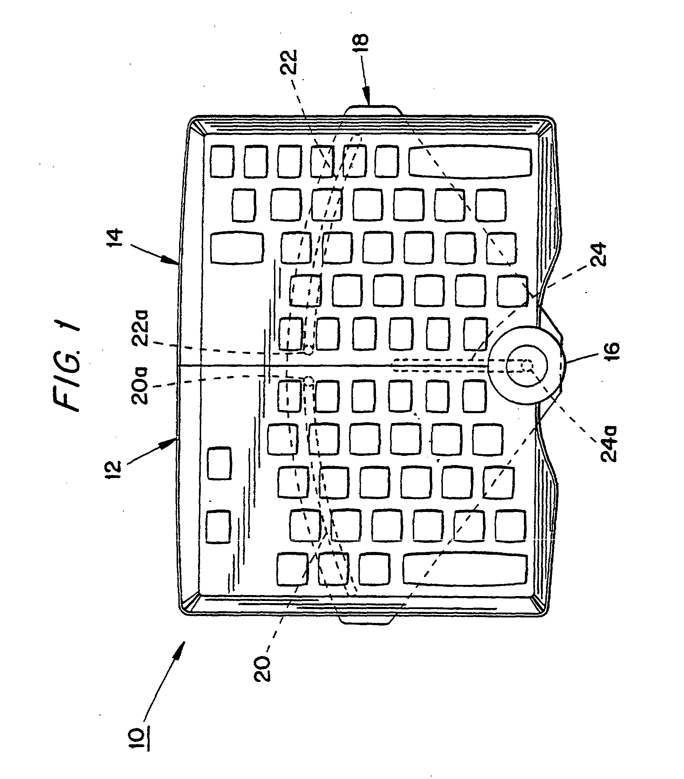

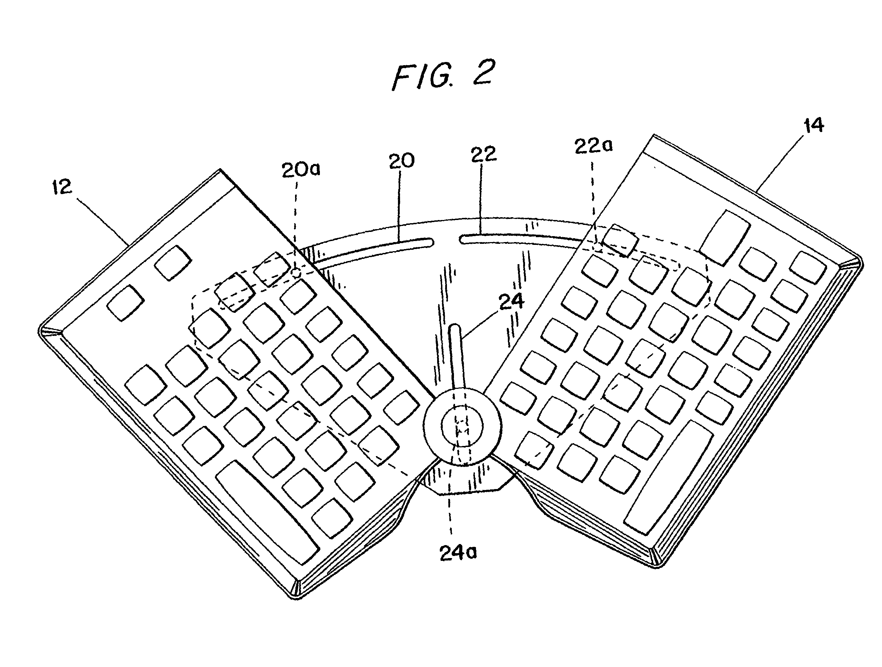

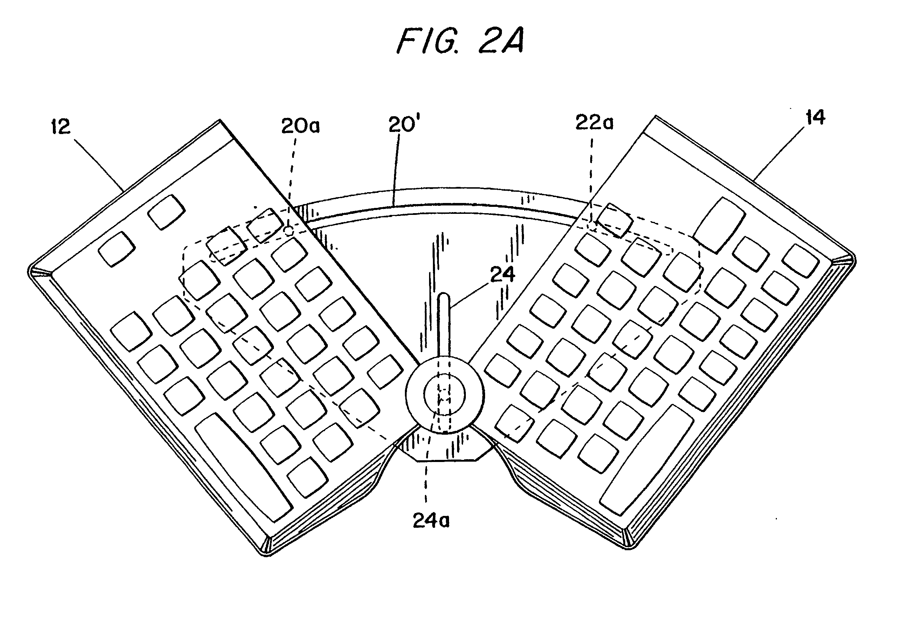

FIG. 1 shows an overview of a split keyboard 10 according to the present invention. The keyboard is shown in a fully-closed position, the dimensions of which can be suitably selected to allow the keyboard to be stored within a relatively small area, such as in a portable laptop computer. The keyboard 10 is shown to include left and right keyboard elements 12 and 14, respectively. It will be appreciated that while the keyboard of FIG. lb includes only two elements, the principles of the present invention can easily be applied to keyboards having more than two elements. The left and right keyboard elements 12 and 14 are connected by a connection means 16. Connection means 16 provides a pivotable connection between the keyboard elements 12 an 14, and will be described in more detail later. The keyboard elements 12 and 14, and the connection means 16, can cooperate with a keyboard base piece 18. The keyboard base piece 18 in this embodiment includes slots 20, 22, and 24 which are associated with the left keyboard element 12, the right keyboard element 14, and the connection means 16, respectively. The slots 20, 22, and 24 receive connector pins 20a, 22a, and 24a associated with the keyboard elements 12 and 14, and the connection means 16, respectively. The connector pins cooperate with the slots such that slidable connection is established between the keyboard elements, connection means, and the keyboard base piece. The slots 12 and 14 are shown as curved, but could be made to be substantially straight or have an alternative shape. Further, the slots 20 and 22 could be replaced by a single slot 20', as illustrated in FIG. 2a. Also, while the split keyboard of FIG. 1 includes three separate connections to the base piece for increased stability, fewer or greater connections may be provided.

FIG. 2 shows the split keyboard of FIG. 1 in a partially opened position. As can be seen, in this partially-opened position the left and right keyboard sections 12 and 14 have been angularly displaced from the closed position shown in FIG. 1. This position is possible because connector pins 20a, 22a, and 24a slide within their associated slots 20, 22, and 24. Specifically, to open the split keyboard from the closed position of shown in FIG. 1, the left and right keyboard pieces are angularly displaced (with pins 20a and 22a sliding along slots 20 and 22) while at substantially the same time the connection means 16 is vertically displaced (with pin 24a sliding along slot 24).

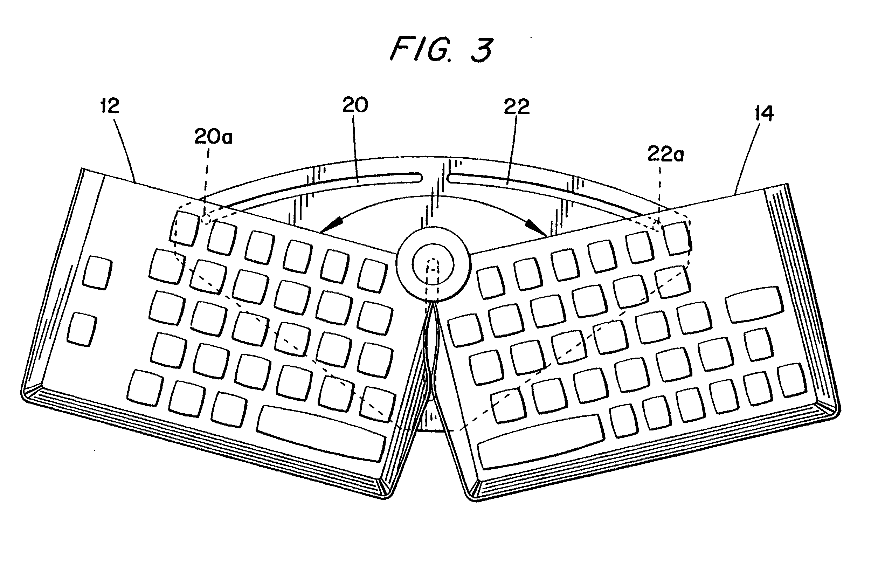

FIG. 3 shows the split keyboard in a fully-opened position. In this position, the left and right keyboard sections are at their maximum level of angular displacement from the closed position of FIG. 1. As shown in FIG. 3, the connector pins 20a and 22a are at the outside-most positions within slots 20 and 22 (that is, each pin is at the end of its associated slot), respectively, and connector pin 24a is at the vertical-most position within slot 24. It should be appreciated that retaining means other than the end of the slots 20, 22 and 24 can be provided to define the fully-opened split keyboard position. For example, the keyboard sections 12 and 14 can be shaped such that they cooperate to retain the sections in one or more positions of angular displacement. Further, as will be described in more detail below, positioning means can be provided within one or more of the slots 20, 22, and 24 to define various positions of angular displacement between the left and right keyboard sections 12 and 14.

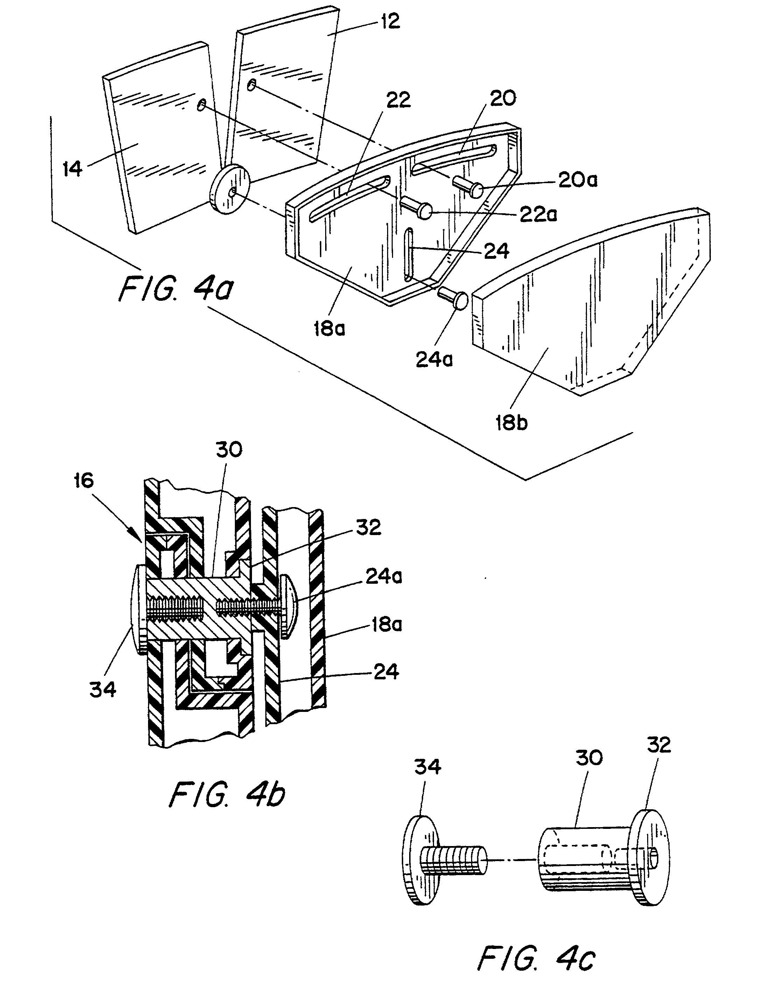

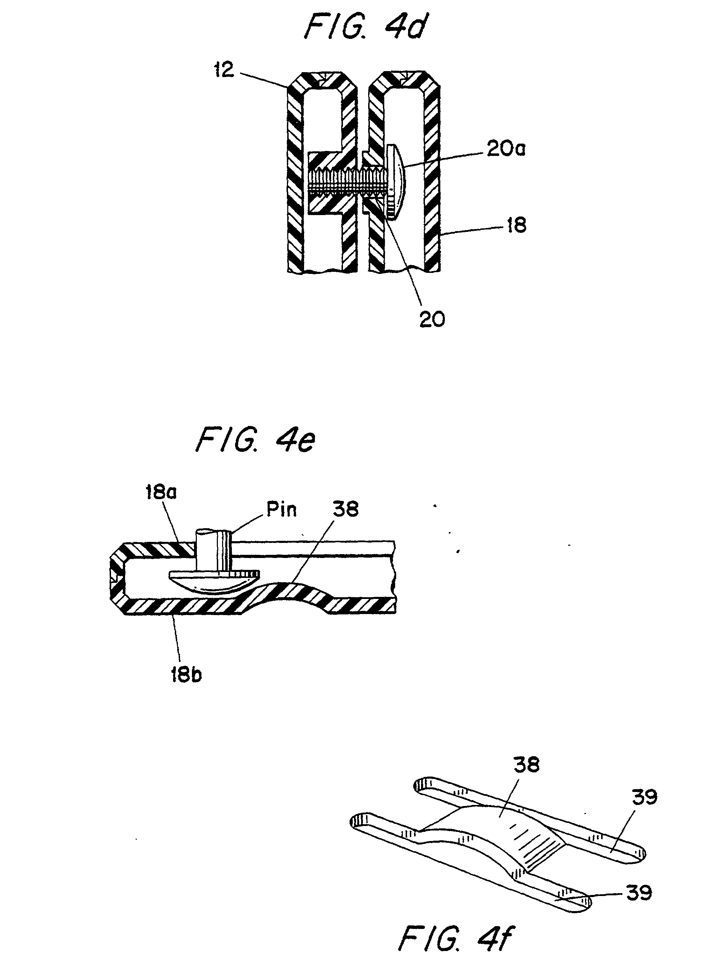

FIG. 4a shows the assembly of the split keyboard of FIG. 1. As shown, left and right keyboard elements 12 and 14 are connected by connecting means 16. This assembly of keyboard elements is slidably connected to a first base plate 18a by connecting connector pins 20a, 22a, and 24a to the left and right keyboard elements 12 and 14, and connection means 16, respectively, through slots 20, 22 and 24 which are located in first base plate 18a. A second base plate 18b is removably attached to first base plate 18a to form the keyboard base element 18. The second base plate 18b is removable to facilitate access to the connector pins 20a, 22a, and 24a. It will be appreciated that the second base plate 18b can be omitted.

FIGS. 4b-c show a cross-sectional diagram of the connection means 16, which includes a connector element 30 which is generally cylindrical and includes hollow openings in each end to receive connection pins One of the ends of the connector element 30 has a flange 32. The hollow opening of the flanged end of the connector element receives connector pin 24a through slot 24 of first base plate 18a. Connector element 30 fits through appropriately-shaped gaps in the left and right keyboard elements 12 and 14, and is secured in the gaps by means of a rotator connector pin 34. The left and right keyboard elements 12 and 14 are maintained in a rotatable relationship by and between the flange 32 and rotator connector pin 34. The rotator connector pin 34 and connector pin 24 can be threaded and attached to the connector element 30 by screwing the pins into the hollow openings of the connector element.

FIG. 4d shows a cross-sectional view of an exemplary connection of the left keyboard section 12 and keyboard base element 18. As shown, connector pin 20a, which can be threaded, is inserted through slot 20 in the first base plate 18a, and is screwed into an opening in the left keyboard 12 to provide a slidable connection between the left keyboard section 12 and the keyboard base element 18. It will be appreciated that a similar connection can be used to connect the right keyboard element. Connection can also be achieved by means other than threaded connector pins.

FIGS. 4e-f show a cross-sectional view of an exemplary retaining means which can be provided in each slot of the keyboard base element 18 to retain the split keyboard elements in one or more positions. As shown, a connector pin which is connected to a keyboard section (not shown) or to the connector means 16 through one of the slots in the first base plate 18a. On the second base plate 18b, there is provide d one or more bumps such as bump 38, which are appropriately positioned within a path defined by the slots in the first base plate 18a. In this example, the bump 38 is located so as to retain the connector pin in a position at the end of its associated slot, as the connector pin is retained between the end of the slot and the bump 38. To allow the connector pin to be moved into and out of this position, bump slots 39 are provided on opposite sides of the bump 38. The bump slots 39 allow the bump 38 to be downwardly displaced while the connector pin is moved into and out of the retained position defined by the bump 38 and the end of the slot. It will be appreciated that rather than bumps such as bump 38, depressions can be provided on the second base plate 18b to retain the connector pin (and thus the keyboard elements) in one or more positions. Further, the slots in the first base plate 18a can be notched to retain the connector pin (and thus the keyboard elements). Many other suitable retaining means can be used.

## Claims

1. A keyboard (10), comprising:
a first keyboard element (12) including a first set of keys;
a second keyboard element (14) including a second set of keys;
connection means (16) for pivotally connecting the first and second keyboard elements at at least one connection point; and
a keyboard base element (18) having a first slot (20) for receiving a first connection pin (20a) connected to the first keyboard element (12) to achieve a first slidable connection and a second slot (22) for receiving a second connection pin (22a) connected to the second keyboard element (14) to achieve a second slidable connection, such that the relative positions of the first and second keyboard elements (12, 14) are adjustable by pivoting the first and second keyboard elements about the connection means while sliding the first connection pin (20a) along the first slot (20) and while sliding the second connection pin (22a) along the second slot (22);
wherein the first and second keyboard elements (12, 14) pivot from a closed storage position to an open position, an upper edge of the first keyboard element (12) in the open position comprising a first top of the keyboard and an upper edge of the second keyboard element (14) in the open position comprising a second top of the keyboard; and
wherein the first top and the second top are substantially parallel to one another when the first and second keyboard elements are in a closed storage position, characterised in that said first connection pin (20a) is attached to said first keyboard element (20) substantially near the first top and said second connection pin (22a) is attached to said second keyboard element (22) substantially near the second top.

2. The keyboard of claim 1, wherein the keyboard base element (18) further includes a connection slot (24) for slidably engaging the keyboard base element (18) with the connection means.

3. The keyboard of claim 1, wherein the first and second slots (20,22) each include means (38) for maintaining at least one position of the at least one first and second connection pins.

4. The keyboard of claim 1, wherein the first and second slots (20, 22) are curved.

5. The keyboard of claim 1, wherein the keyboard base element (18) includes means (18b) for accessing the first and second connection pins.

6. A method for forming a keyboard (10), comprising the steps of:
producing a first and a second keyboard element (12, 14) rotatably connected to each other by a connector means (16), each keyboard element including a set of keys;
forming a base element (18) having a first connector pin receiving slot (20) and a second connector pin receiving slot (22);
connecting a first connector pin (20a) between said first keyboard element (12) and the first connector pin receiving slot (20) and connecting a second connector pin (22a) between the second keyboard element (14) and the second connector pin receiving slot (22) such that the keyboard elements are slidably connected to the base element;
wherein the first and second keyboard elements (12, 14) pivot from a closed storage position to an open position, an upper edge of the first keyboard element (12) in the open position comprising a first top of the keyboard and an upper edge of the second keyboard element (14) in the open position comprising a second top of the keyboard; and
wherein the respective tops of the first and second keyboard elements (12, 14) are substantially parallel to one another when the first and second keyboard elements (12, 14) are in a closed storage position, characterised in that said first connection pin (20a) is attached to said first keyboard element (12) substantially near the first top and said second connection pin (22a) is attached to said second keyboard element (14) substantially near the second top.

7. The method of claim 6, wherein the base element (18) has a connector means receiving slot (24) for receiving a connector means pin (24a), and the step of connecting further includes connecting the connector means pin (24a) between the connector means (16) and the connector means receiving slot (24).

8. The method of claim 6, wherein the first and the second slots (20, 22) include means (38) for maintaining a position of the first and second connector pins (20a, 22a).

9. The method of claim 6, wherein the first and second slots (20,22) are curved.

## Patentansprüche

1. Tastatur (10) umfassend:
ein erstes Tastaturelement (12) mit einem ersten Satz von Tasten;
ein zweites Tastaturelement (14) mit einem zweiten Satz von Tasten;
eine Verbindungseinrichtung (16) zum schwenkbaren Verbinden der ersten und zweiten Tastaturelemente an wenigstens einem Verbindungspunkt; und
ein Tastaturbasiselement (18) mit einem ersten Schlitz (20) zur Aufnahme eines ersten Verbindungsstifts (20a), der mit dem ersten Tastaturelement (12) verbunden ist, um eine erste verschiebbare Verbindung zu erzielen, und mit einem zweiten Schlitz (22) zum Empfangen eines zweiten Verbindungsstifts (22a), der mit dem zweiten Tastaturelement (14) verbunden ist, um eine zweite verschiebbare Verbindung zu erzielen, so dass die relativen Positionen der ersten und zweiten Tastaturelemente (12, 14) durch Verschwenken der ersten und zweiten Tastaturelemente um die Verbindungseinrichtung einstellbar ist, während der erste Verbindungsstift (20a) entlang des ersten Schlitzes (20) verschoben wird und der zweite Verbindungsstifts (22a) entlang des zweiten Schlitzes 22 verschoben wird;
wobei die ersten und zweiten Tastaturelemente (12, 14) sich von einer geschlossenen Speicherposition in eine offene Position verschwenken, wobei eine obere Kante des ersten Tastaturelements (12) in der offenen Position ein erstes Oberteil der Tastatur umfasst und eine obere Kante des zweiten Tastaturelements (14) in der offenen Position ein zweites Oberteil der Tastatur umfasst; und
wobei das erste Oberteil und das zweite Oberteil im wesentlichen parallel zueinander sind, wenn die ersten und zweiten Tastaturelemente in einer geschlossenen Speicherposition sind, ***dadurch gekennzeichnet, dass*** der erste Verbindungsstift (20a) an dem ersten Tastaturelements (20) im wesentlichen in der Nähe des ersten Oberteils angebracht ist und der zweite Verbindungsstift (22a) an dem zweiten Tastaturelement (22) im wesentlichen in der Nähe des zweiten Oberteils angebracht ist.

2. Tastatur nach Anspruch 1, wobei das TastaturBasiselement (18) ferner einen Verbindungsschlitz (24) umfasst, um an dem Tastaturbasiselement (18) verschiebbar mit der Verbindungseinrichtung einzugreifen.

3. Tastatur nach Anspruch 1, wobei die ersten und zweiten Schlitze (20. 22) jeweils eine Einrichtung (38) zum Aufrechterhalten wenigstens einer Position der wenigstens einen ersten und zweiten Verbindungsstifte umfassen.

4. Tastatur nach Anspruch 1, wobei die ersten und zweiten Schlitze (20, 22) gekrümmt sind.

5. Tastatur nach Anspruch 1, wobei das TastaturBasiselement (18) eine Einrichtung (18b) zum Zugreifen auf die ersten und zweiten Verbindungsstifte umfasst.

6. Verfahren zum Bilden einer Tastatur (10), umfassend die folgenden Schritte:
Erzeugen eines ersten und zweiten Tastaturelements (12, 14), die drehbar miteinander über eine Verbindungseinrichtung (16) verbunden sind, wobei jedes Tastaturelement einen Satz von Tasten umfasst;
Bilden eines Basiselements (18) mit einem ersten Verbinderstift-Aufnahmeschlitz (20) und einem zweiten Verbinderstift-Aufnahmeschlitz (22) ;
Verbinden eines ersten Verbinderstifts (20a) zwischen dem ersten Tastaturelement (12) und dem ersten Verbinderstift-Aufnahmeschlitz (20) und Verbinden eines zweiten Verbinderstifts (22a) zwischen dem zweiten Tastaturelement (14) und dem Verbinderstift-Aufnahmeschlitz (22), so dass die Tastaturelemente verschiebbar mit dem Basiselement verbunden sind;
wobei die ersten und zweiten Tastaturelemente (12, 14) sich von einer geschlossenen Speicherposition in eine offene Position verschwenken, wobei eine obere Kante des ersten Tastaturelements (12) in der offenen Position ein erstes Oberteil der Tastatur umfasst und eine obere Kante des zweiten Tastaturelements (14) in der offenen Position ein zweites Oberteil der Tastatur umfasst; und
wobei die jeweiligen Oberteile der ersten und zweiten Tastaturelemente (12, 14) im wesentlichen parallel zueinander sind, wenn die ersten und zweiten Tastaturelemente (12, 14) in einer geschlossenen Speicherposition sind, ***dadurch gekennzeichnet*, *dass*** der erste Verbindungsstift (20a) an dem ersten Tastaturelement (12) im wesentlichen in der Nähe des ersten Oberteils angebracht ist und der zweite Verbindungsstift (22a) an dem zweiten Tastaturelements (14) im wesentlichen in der Nähe des zweiten Oberteils angebracht ist.

7. Verfahren nach Anspruch 6, wobei das Basiselement (18) einen Verbindungseinrichtungs-Aufnahmeschlitz (24) zur Aufnahme eines Verbindereinrichtungsstifts (24a) umfasst und der Verbindungsschritt ferner ein Verbinden des Verbindereinrichtungsstifts (24a) zwischen die Verbindungseinrichtung (16) und den Verbindereinrichtungs-Aufnahmeschlitz (24) umfasst.

8. Verfahren nach Anspruch 6, wobei die ersten und zweiten Schlitze (20, 22) eine Einrichtung (38) zum Halten einer Position der ersten und zweiten Verbinderstifte (20a, 22a) umfassen.

9. Verfahren nach Anspruch 6, wobei die ersten und zweiten Schlitze (20, 22) gekrümmt sind.

## Revendications

1. Clavier (10), comportant :
un premier élément de clavier (12) comprenant un premier ensemble de touches ;
un second élément de clavier (14) comprenant un second ensemble de touches ;
un moyen de liaison (16) destiné à relier de façon pivotante les premier et second éléments de clavier en au moins un point de liaison ; et
un élément (18) de base de clavier ayant une première fente (20) destinée à recevoir un premier ergot (20a) de liaison relié au premier élément (12) de clavier pour établir une première liaison coulissante, et une seconde fente (22) destinée à recevoir un second ergot (22a) de liaison relié au second élément (14) de clavier pour établir une seconde liaison coulissante, de façon que les positions relatives des premier et second éléments de clavier (12,14) puissent être réglées en faisant pivoter les premier et second éléments de clavier autour du moyen de liaison tout en faisant coulisser le premier ergot de liaison (20a) le long de la première fente (20) et en faisant coulisser le second ergot de liaison (22a) le long de la seconde fente (22) ;
dans lequel les premier et second éléments de clavier (12,14) pivotent d'une position fermée de rangement à une position ouverte, un bord supérieur du premier élément de clavier (12) dans la position ouverte constituant un premier dessus du clavier et un bord supérieur du second élément de clavier (14) en la position ouverte constituant un second dessus du clavier ; et
dans lequel le premier dessus et le second dessus sont sensiblement parallèles l'un à l'autre lorsque les premier et second éléments de clavier sont dans une position fermée de rangement, caractérisé en ce que ledit premier ergot (20a) de liaison est fixé audit premier élément de clavier (20) sensiblement à proximité du premier dessus et ledit second ergot (22a) de liaison est fixé audit second élément de clavier (22) sensiblement à proximité du second dessus.

2. Clavier selon la revendication 1, dans lequel l'élément de base (18) du clavier comprend en outre une fente (24) de liaison destinée à mettre en prise coulissante l'élément de base (18) du clavier avec les moyens de liaison.

3. Clavier selon la revendication 1, dans lequel les première et seconde fentes (20,22) comprennent chacune un moyen (38) destiné à maintenir au moins une position d'au moins l'un des premier et second ergots de liaison.

4. Clavier selon la revendication 1, dans lequel les première et seconde fentes (20,22) sont incurvées.

5. Clavier selon la revendication 1, dans lequel l'élément de base (18) du clavier comprend un moyen (18b) pour accéder aux premier et second ergots de liaison.

6. Procédé pour former un clavier (10), comprenant les étapes dans lesquelles :
on produit des premier et second éléments de clavier (12,14) reliés de façon tournante l'un à l'autre par un moyen de liaison (16), chaque élément de clavier comprenant un ensemble de touches ;
on forme un élément de base (18) ayant une première fente (20) de réception d'un ergot de liaison et une seconde fente (22) de réception d'un ergot de liaison ;
on relie un premier ergot de liaison (20a) entre le premier élément de clavier (12) et la première fente (20) de réception d'un ergot de liaison et on relie un second ergot de liaison (22a) entre le second élément de clavier (14) et la seconde fente (22) de réception d'un ergot de liaison afin que les éléments de clavier soient reliés de façon coulissante à l'élément de base ;
dans lequel les premier et second éléments de clavier (12,14) pivotent d'une position fermée de rangement à une position ouverte, un bord supérieur du premier élément de clavier (12) dans la position ouverte constituant un premier dessus du clavier et un bord supérieur du second élément de clavier (14) dans la position ouverte constituant un second dessus du clavier ; et
dans lequel les dessus respectifs des premier et second éléments de clavier (12,14) sont sensiblement parallèles l'un à l'autre lorsque les premier et second éléments de clavier (12,14) sont dans une position fermée de rangement, caractérisé en ce que ledit premier ergot de liaison (20a) est fixé audit premier élément de clavier (12) sensiblement à proximité du premier dessus et ledit second ergot (22a) de liaison est fixé audit second élément de clavier (14) sensiblement à proximité du second dessus.

7. Procédé selon la revendication 6, dans lequel l'élément de base (18) présente une fente (24) de réception d'un moyen de liaison destiné à recevoir un ergot (24a) d'un moyen de liaison, et l'étape de liaison comprend en outre la liaison de l'ergot (24a) du moyen de liaison entre le moyen de liaison (16) et la fente (24) de réception du moyen de liaison.

8. Procédé selon la revendication 6, dans lequel les première et seconde fentes (20,22) comprennent des moyens (38) destinés à maintenir en position les premier et second ergots de liaison (20a, 22a).

9. Procédé selon la revendication 6, dans lequel les première et seconde fentes (20,22) sont incurvées.
